# EUROPÄISCHE PATENTSCHRIFT

(11) **EP 0 850 966 B1**
(45) Veröffentlichungstag und Bekanntmachung des Hinweises auf die Patenterteilung: **13.09.2000**
(21) Anmeldenummer: 97121708.8
(22) Anmeldetag: 10.12.1997
(51) Int. Cl.: C08G 61/08

(54) **Verfahren zur Herstellung hydrierter ringgeöffneter Metathesepolymeren**
Process for the preparation of hydrogenated ring opening metathese polymers
Procédé de préparation de polymères de métathèse à ouverture de cycle hydrogénés

(30) Priorität: 23.12.1996 DE 19654074
(43) Veröffentlichungstag der Anmeldung: 01.07.1998
(73) Patentinhaber: BAYER AG, 51368 Leverkusen (DE)
(72) Erfinder: Chen, Yun, Dr., 47800 Krefeld (DE); Dujardin, Ralf, Dr., 47877 Willich (DE); Pielartzik, Harald, Dr., 47800 Krefeld (DE); Franz, Uli Werner, Dr., Moon Township, Pennsyl.15108 (US)

(56) Entgegenhaltungen:
- WO-A-93/20111
- WO-A-95/33786
- DE-A- 4 139 476
- BENEDICTO A D ET AL: "MICROSTRUCTURAL STUDIES OF POLY(7-OXABICYCLO(2.2.1)HEPT-2-ENE) DERIVATIVES PREPARED FROM SELECTED RUTHENIUM CATALYSTS" MACROMOLECULES, Bd. 25, Nr. 22, 26.Oktober 1992, Seiten 5893-5900, XP000315444
- PATENT ABSTRACTS OF JAPAN vol. 014, no. 106 (C-0694), 27.Februar 1990 & JP 01 311120 A (JAPAN SYNTHETIC RUBBER CO LTD), 15.Dezember 1989,

## Beschreibung

Die vorliegende Erfindung betrifft ein Verfahren zur Herstellung hydrierter ringgeöffneter Metathesepolymeren (ROMP-Polymeren). Die aus diesem Verfahren erhältliche Materialien weisen besonders hohe Reinheit und gute Thermo- und Lichtstabilität auf. Die meisten hydrierten ringgeöffneten Metathesepolymeren aus Norbornen- oder Tetracyclododecenderivaten sind amorphe thermoplastische Kunststoffe mit breiten Anwendungsmöglichkeiten.

Ringgeöffnete Metathesepolymere aus ringgespannten Cyloolefinen wie z.B. Norbornenderivaten, Tetracyclododecenderivaten sind bekannt (z.B. in EP-A 002 277). Sie sind aufgrund der Kohlenstoff-Kohlenstoff-Doppelbindungen in dem Polymerrückgrat thermisch und photochemisch jedoch instabil. Daher bestand die Notwendigkeit, derartige ungesättigten Polymere je nach Anwendungszweck teilweise oder vollständig zu hydrieren.

Hydrierte Produkte von Polymeren aus ringöffnender Metathesepolymerisation (ROMP) sind auch bekannt. EP-317 262 und DE 41 39 476 beschreiben hydrierte ROMP-Polymere aus Tetracyclododecenderivaten mit Estergruppe z.B. 7-Methyl-7-methoxycarbonyltetracyclododecen. Das genannte Monomer wurde unter Katalyse von Wolframhexachlorid, modifiziert durch Paraldehyd, in Gegenwart von Triisobutylaluminium oder Diethylaluminiumchlorid ringöffnend polymerisiert. Das erhaltene Polymer wurde anschließend unter Wasserstoffdruck hydriert, wobei als Hydrierkatalysator Nickelnaphthenat, Rhodium auf Kohle, Palladium auf Kieselgur, RuHCl(CO)(PPh₃)₃ etc. verwendet werden können. EP-303 246 beschreibt z.B. die ringöffnende Copolymerisation von Dicyclopentadien and Methyltetracyclododecen unter Katalyse von Molybdenpentachlorid in Gegenwart von Ethylaluminiumsesquichlorid. Das erhaltene Polymer wurde unter Katalyse von Nickel auf Aluminiumoxid hydriert.

Die im Stand der Technik beschriebenen Polymerisations- und Hydrierungsverfahren verwenden Polymerisationskatalysatoren in mehreren Komponenten und einen zusätzlichen Hydrierkatalysator. Die Katalysatorreste summieren sich in den Produkten auf. Diese Katalysatorreste können Metallreste (W, Ti, Mo, Re, Ru, Al etc.), Halogen, Phosphor, Silicium etc. enthalten, die die Polymereigenschaften wie z. B. Tranparenz, Stabilität, Verarbeitbarkeit drastisch beeinträchtigen. Dadurch erhöht sich die Reinigungsbelastung nach der Polymersynthese.

Daher bestand die Aufgabe, Verfahren zu entwickeln, wobei nur ein einziger metallhaltiger Katalysator mit hoher Polymerisations- und Hydrierungsaktivität für die Herstellung hydrierter ROMP-Polymeren zugesetzt wird.

US-P 5 312 940 und US-P 5 342 909 beschreiben unter anderem die Ruthenium-Carben-Komplexe der allgemeinen Formel (I) 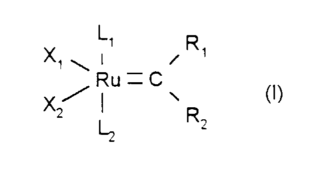 worin
- R₁ und R₂: unabhängig von einander Wasserstoff, C₂-C₂₀-Alkenyl, C₁-C₂₀-Alkyl, Aryl, C₁-C₂₀-Carboxylat, C₁-C₂₀-Alkoxy, C₂-C₂₀-Alkenyloxy, Aryloxy, C₂-C₂₀-Alkoxycarbonyl, C₁-C₂₀-Alkylthio, die gegebenfalls durch C₁-C₅-Alkyl, Halogen, C₁-C₅-Alkoxy oder gegebenfalls durch C₁-C₅-Alkyl, Halogen, C₁-C₅-Alkoxy substituiertes Phenyl substituiert sein können, bedeuten;
- X₁ und X₂: unabhängig von einander einen beliebigen anionischen Liganden bedeuten;
- L₁ und L₂: unabhängig von einander einen beliebigen neutralen Elektronendonor bedeuten und
zwei oder drei von X₁, X₂, L₁ und L₂ weiterhin zusammen einen mehrzähnigen Chelatliganden bilden können,
und ihre Anwendung als Katalysatoren für ringöffnende Metathesepolymerisation von cyclischen Olefinen.

Gegenstand der Erfindung ist ein Verfahren zur Herstellung hydrierter ringöffnender Metathese(co)polymeren aus cyclischen Olefinen unter Verwendung der obengenannten Ruthenium-Carben-Komplexe als Katalysatoren für die Polymerisationsstufe, dadurch gekennzeichnet, daß man nach der Polymerisation gegebenfalls den Katalysator durch Zusatz eines Modifikators modifiziert und das Polymerisationsprodukt als Lösung - gegebenfalls mit dem gleichen inerten Lösungsmittel wie in der Polymerisation oder mit einem anderen inerten Lösungsmittel verdünnt - ohne Zusatz eines Hydrierkatalysators bei Temperaturen von 0°C bis 200°C, vorzugsweise von 35°C bis 150°C, unter einem Wasserstoffdruck von 2 bis 200 bar, vorzugsweise von 10 bis 50 bar, hydriert, wobei mindestens 60%, vorzugsweise mindestens 95%, der olefinischen Doppelbindungen abgesättigt sind.

Bevorzugte Katalysatoren sind die Ruthenium-Carben-Komplexe der allgemeinen Formel (I) 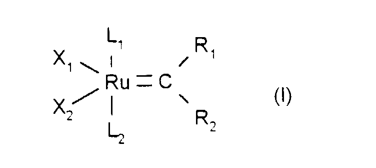 worin
- R₁ und R₂: unabhängig von einander Wasserstoff, C₂-C₅-Alkenyl, C₁-C₅-Alkyl, Phenyl, C₁-C₅-Carboxylat, C₁-C₅-Alkoxy, Phenoxy, C₂-C₅-Alkoxycarbonyl, die gegebenfalls durch C₁-C₅-Alkyl, Halogen, C₁-C₅-Alkoxy oder gegebenfalls durch C₁-C₅-Alkyl, Halogen, C₁-C₅-Alkoxy substituiertes Phenyl substituiert sein können, bedeuten;
- X₁ und X₂: unabhängig von einander einen anionischen Liganden aus der Gruppe Cl, Br, C₁-C₅-Carboxylat, Phenoxy, C₁-C₅-Alkoxy, C₁-C₅-Alkylthio, die gegebenenfalls durch C₁-C₅-Alkyl, Halogen, C₁-C₅-Alkoxy oder gegebenenfalls durch C₁-C₅-Alkyl, Halogen, C₁-C₅-Alkoxy substituiertes Phenyl substituiert sein können, bedeuten;
- L₁ und L₂: unabhängig von einander einen neutralen Liganden aus der Gruppe Aryl- oder C₁-C₁₀-Alkylphosphine, die gegebenenfalls durch C₁-C₅-Alkyl, Halogen, C₁-C₅-Alkoxy oder gegebenfalls durch C₁-C₅-Alkyl, Halogen, C₁-C₅-Alkoxy substituiertes Phenyl substituiert sein können, bedeuten.

Bevorzugte Katalysatoren sind die Ruthenium-Carben-Komplexe der allgemeinen Formel (I), worin R₁ und R₂ unabhängig voneinander Wasserstoff, Methyl, Ethyl, Phenyl, gegebenenfalls durch Methyl, Ethyl oder Phenyl substituiertes Vinyl bedeuten, X₁ und X₂ unabhängig voneinander Cl, Br bedeuten; L₁ und L₂ unabhängig voneinander Trimethylphosphin, Triethylphosphin, Triphenylphoshin oder Tricyclohexylphosphin bedeuten.

Die einsetzbaren cyclischen olefinischen Monomeren sind mono- oder multicyclische Monoolefine, Diolefine, Triolefine oder Tetraolefine, die eine Reihe polarer Funktionalitäten wie z.B. Halogen, Cyano-, Carbonsäurester-, Carbonsäureamid-, Carbonsäureanhydrid-, Carbonsäureimid-, etherische Sauerstoff-, Carbonylgruppe etc. tragen können. Bevorzugte Monomeren sind multicyclische ringgespannte Olefine mit mindestens einer Norbornen-Teilstruktur.

Die oben beschriebenen Monomeren sind bekannte Verbindungen in der organischen chemischen Literatur.

Besonders bevorzugte Monomeren oder Comonomere sind z.B.:
Norbornen-2,
5-Methoxycarbonyl-norbornen-2,
5-Methyl-5-methoxycarbonyl-norbornen-2,
5-Cyanonorbornen-2,
5-Methyl-5-cyanonorbornen-2,
5,5-Dicyanonorbornen-2,
1,4,5,8-Dimethano-1,4,4a,5,6,7,8,8a-octahydronaphthalin,
6-Methyl-1,4,5,8-dimethano-1,4,4a,5,6,7,8,8a-octahydronaphthalin,
6-Methyl-6-methoxycarbonyl-1,4,5,8-dimethano-1,4,4a,5,6,7,8,8a-octahydronaphthalin,
6-Methyloxycarbonyl-1,4,5,8-dimethano-1,4,4a,5,6,7,8,8a-octahydronaphthalin,
6-Cyano-1,4,5,8-dimethano-1,4,4a,5,6,7,8,8a-octahydronaphthalin,
6-Ethyl-1,4,5,8-dimethano-1,4,4a,5,6,7,8,8a-octahydronaphthalin,
6-Ethyliden-1,4,5,8-dimethano-1,4,4a,5,6,7,8,8a-octahydronaphthalin,
6,7-Dimethyl-1,4,5,8-dimethano-1,4,4a,5,6,7,8,8a-octahydronaphthalin,
Dicyclopentadien,
Tricyclopentadien,
Tetracyclopentadien,
1,4-Dimethano-1,4,4a,9a-tetrahydrofluoren.

Als Lösungsmittel für die Lösungspolymerisation kommen organische, protische oder wäßrige Lösungsmittel in Betracht, die unter Polymerisationsbedingungen inert sind. Beispiele sind aromatische Kohlenwasserstoffe, halogenierte Kohlenwasserstoffe, Ether, aliphatische Kohlenwasserstoffe, Alkohole, Wasser oder ihre Mischungen. Bevorzugte Beispiele sind Benzol, Toluol, Methylenchlorid, Dichlorethan, Chlorbenzol, Dichlorbenzol, Diethylether, Tetrahydrofuran, Hexan und Cyclohexan.

Die Polymerisation kann bei Temperaturen von 0°C bis 100°C, vorzugsweise von 25°C bis 45°C durchgeführt werden.

Zur Einstellung des molekularen Gewichts des Produkts können Kettenregler in der Polymerisationsstufe zugesetzt werden. Geeignete Kettenregler für ringöffnende Metathesepolymerisation sind offenkettige Verbindungen mit Kohlenstoff-Kohlenstoff-Doppelbindungen. Beispiele für Kettenregler sind C₁-C₁₂-Alkene, Allylacetat, Allylalkylether, Styrol, 1,4-Dimethoxybuten-2. Das Molverhältnis von Kettenregler zu Monomer kann zur Einstellung der Molmasse des Produkts zwischen 1:50 und 1:10000, bevorzugt zwischen 1:100 und 1:1000 variieren.

Als gegebenenfalls zuzusetzender Modifikation zur Modifizierung des Katalysators werden Alkylvinylether verwendet. Der Alkylvinylether wandelt den Ruthenium-Carben-Komplex zu einem Ruthenium-Alkoxycarben-Komplex um, wodurch die Geschwindigkeit der Metathesereaktion drastisch herabgesetzt wird. Das Molverhältnis von Katalysator zu Modifikator kann variieren zwischen 1:1 und 1:100, bevorzugt zwischen 1:1 und 1:10.

Das Molverhältnis von Katalysator zu Monomer kann variieren zwischen 1:5 und 1:100 000, bevorzugt zwischen 1:1000 und 1:50 000.

Das erfindungsgemäße Verfahren wird im allgemeinen wie folgt durchgeführt: Die Monomeren werden gewöhnlich in einem inerten Lösungsmittel gelöst. Die Konzentration der Monomeren kann 5-60% betragen, bevorzugt sind Konzentrationen von 5-30%. Anschließend wird bei Bedarf der Kettenregler und dann der Katalysator zudosiert. Die Reaktion läuft ohne größere Wärmetönung ab. Die Reaktionszeit kann wenige Minuten bis einige Stunden betragen. Anschließend wird bei Bedarf ein Modifikator zugesetzt. Die Polymerisationslösung wird gegebenenfalls mit dem gleichen Lösungsmittel wie in der Polymerisation oder mit einem anderen inerten Lösungsmittel zu einer Konzentration von 1-50%, vorzugsweise 5%-30%, verdünnt und anschließend in einem Hochdruckautoklaven hydriert. Die Hydrierungszeit kann 1-24 Stunden betragen.

Die Isolierung des Hydrierungsprodukts kann nach bekannten Methoden erfolgen, beispielweise durch Fällung mit niederen aliphatischen Alkoholen aus der Polymerlösung oder durch Eintragen der Polymerlösung in heißes Wasser (Strippen).

Die Polymerisation und die Hydrierung können sowohl diskontinuierlich als auch kontinuierlich, z.B. in einer Rührkesselreihe oder in einer Reaktionsschnecke durchgeführt werden.

Die erfindungsgemäßen hydrierten ROMP-Polymere weisen ein gewichtsgemitteltes molekulares Gewicht - ermittelt durch Gelpermeationschromatographie mit Polystyrol als Kalibrierung - von 5000 bis 1000000, vorzugsweise 5000 bis 150000 auf. Das molekulare Gewicht ist von den Verfahrensparametern, insbesondere von dem Monomer/Katalysator-Verhältnis und Monomer/Kettenregler-Verhältnis abhängig und läßt sich durch Variation dieser Parameter zu gewünschten Werten einstellen.

Die Produkte aus dem erfindungsgemäßen Verfahren enthalten besonders wenig Katalysatorreste. Eine Reinigung ist für die meisten Anwendungen nicht mehr notwendig. Die Spuren von Elementen wie Chlor, Ruthenium und Phosphor etc. lassen sich bei Bedarf durch Kontaktierung der Hydrierungsprodukte mit wäßriger Lösung einer organischen/anorganischen Säure wie z.B. Ameisensäure, Essigsäure, Propionsäure und Salzsäure, oder mit einem aktiven Festaborber wie z.B. Kieselgel, Kieselgur, Aktivkohle oder Aluminiumoxid effektiv entfernen.

Im Vergleich zum Stand der Technik zeichnet sich das erfindungsgemäße Verfahren insbesondere dadurch aus:
1. daß es nur eine einzige Katalysatorkomponente benötigt,
2. daß es eine Reihe polarer Substituenten in Monomeren toleriert,
3. daß das resultierende Produkt besonders wenig Metallreste enthält, so daß eine gesonderte Reinigungsstufe für die meisten Anwendungen nicht notwendig ist.

Die vorliegende Erfindung wird im folgenden unter Bezugnahme auf Beispiele erläutert. Sie ist jedoch nicht auf die Beispiele beschränkt.

### Beispiele:

### Beispiel 1:

Hydriertes ringgeöffnetes Metathesepolymer aus Norbornen-2

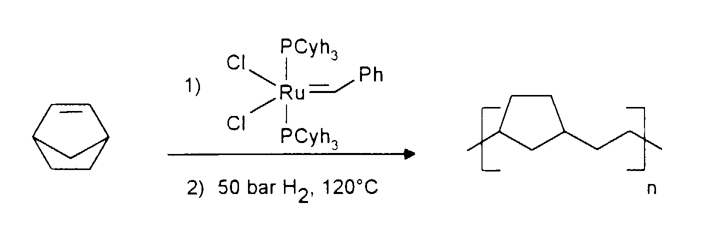

Zu einer Mischung von 1 ml (0,01 mMol) einer 0,01 M Lösung von Bis(tricyclohexylphosphin)-benzylidenrutheniumdichlorid in Toluol und 10 ml Toluol tropft man bei Raumtemperatur und unter Stickstoff eine Lösung von 4,7 g (50 mMol) Norbornen-2, 58 mg (0,5 mMol) 1,4-Dimethoxy-cis-buten-2 in 15 ml Toluol. Man rührt das Reaktionsgemisch 3 Stunden weiter und beendet die Polymerisation mit 0,2 ml Ethylvinylether. Die dabei resultierende viskose Lösung wird mit 50 ml Toluol verdünnt und 12 h bei 120°C unter 50 bar Wasserstoffdruck hydriert. Man kühlt auf Raumtemperatur ab und tropft die Lösung in Methanol zu. Nach Absaugen und Trocknen erhält man 4,7 g Polymer. 1H- und 13C-NMR zeigen, daß 90% der olefinischen Doppelbindungen hydriert sind.

### Beispiel 2:

Hydriertes ringgeöffnetes Metathesepolymer aus 7-Methyl-7-methoxycarbonyl-tetracyclododecen

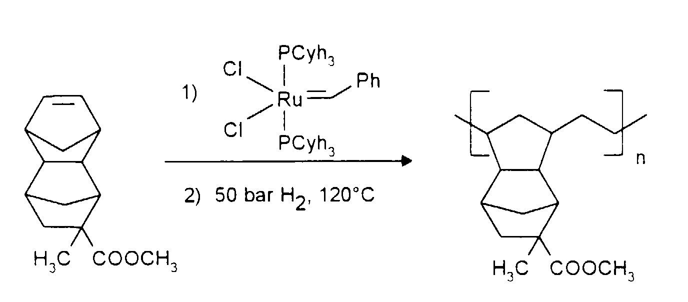

Zu einer Löung von 33 mg (0,04 mMol) Bis(tricyclohexylphosphin)benzylidenrutheniumdichlorid in 30 ml Tetrahydrofuran tropft man bei Raumtemperatur und unter Stickstoff eine Lösung von 27,8 g (120 mMol) 7-Methyl-7-methoxycarbonyltetracyclododecen, 14 mg (0,6 mMol) 1-Hexen in 100 ml Tetrahydrofuran. Man rührt das Reaktionsgemisch 3 Stunden weiter und beendet die Polymerisation mit 0,2 ml Ethylvinylether. Die dabei resultierende viskose Lösung wird mit 500 ml Tetrahydrofuran verdünnt und 12 h bei 120°C unter 50 bar Wasserstoffdruck hydriert. Man kühlt auf Raumtemperatur ab und tropft die Lösung in Methanol zu. Nach Absaugen und Trocknen erhält man 26 g Polymer mit einem gewichtsgemittelten Molgewicht von 96700, einem zahlgemittelten Molgewicht von 41500 (gemessen durch Gelpermeationschromatographie auf Polystyrol-Kalibrierung). 1H- und 13C-NMR zeigen, daß 96% der olefinischen Doppelbindungen hydriert sind.

### Beispiel 3:

Hydriertes ringgeöffnetes Metathesepolymer aus 7-Ethyliden-tetracyclododecen

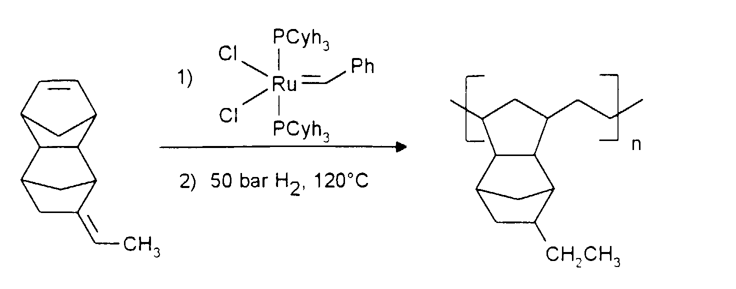

Zu einer Lösung von 20 mg (0,024 mMol) Bis(tricyclohexylphosphin)benzylidenrutheniumdichlorid in 30 ml Toluol tropft man bei Raumtemperatur und unter Stickstoff eine Lösung von von 4,52 g (24,3 mMol) 7-Ethyliden-tetracyclododecen, 11 mg (0,12 mMol) Allylethylether in 5 ml Toluol. Man rührt das Reaktionsgemisch 3 Stunden weiter und beendet die Polymerisation mit 0,2 ml Ethylvinylether. Die dabei resultierende viskose Lösung wird mit 200 ml Toluol verdünnt und 12 h bei 120°C unter 50 bar Wasserstoffdruck hydriert. Man kühlt auf Raumtemperatur ab und tropft die Lösung in Methanol zu. Nach Absaugen und Trocknen erhält man 4,3 g Polymer mit einem gewichtsgemittelten Molgewicht von 122000, einem zahlgemittelten Molgewicht von 48100 (gemessen durch Gelpermeationschromatographie auf Polystyrol-Kalibrierung). 1H- und 13C-NMR zeigen, daß mehr als 98% der olefinischen Doppelbindungen hydriert sind.

Zur Reinigung löst man das Rohprodukt in Xylol, versetzt die Lösung mit 20 g Kieselgur, rührt die Suspension 30 min unter Rückfluß, saugt warm ab und fällt das Polymer wieder in Methanol aus.

### Vergleichsbeispiel 1:

### Hydriertes ringgeöffnetes Metathesepolymer aus 7-Ethyliden-tetracyclo-dodecen

(1) Zu einer Mischung von 22,3 g (120 mMol) 7-Ethyliden-tetracyclododecen, 2 ml (1 mMol) einer 0,5 M Lösung von 1-Hexen in Toluol und 110 ml Toluol setzt man in der Reihenfolge 3.8 ml (3,8 mMol) einer 1 M Lösung von Triethylaluminium, 1,4 ml (10 mMol) Triethylamin und 1,0 ml (1,0 mMol) einer 1 M Lösung von Titantetrachlorid in Toluol zu. Man rührt das Reaktionsgemisch 3 Stunden weiter und stoppt die Polymerisation mit 1 ml Methanol. Die dabei resultierende viskose Lösung wird in Methanol zugetropft. Das ausgefallene Produkt wird abgesaugt und unter Vakuum getrocknet. Man erhält 22 g Polymer mit einem gewichtsgemittelten Molgewicht von 79700, einem zahlgemittelten Molgewicht von 35100.
(2) 22 g des in Stufe (1) erhaltenen Produktes werden in einem Hochdruckautoklaven in 200 ml Toluol gelöst. Der Autoklav wird mit Sticktoff inertisiert. Man setzt 50 mg RuH₂(CO)(PPh₃)₃ hinzu und hydriert die Mischung bei 120°C unter 50 bar-Wasserstoffdruck für 12 Stunden. Man kühlt auf Raumtemperatur ab und tropft die Lösung in Methanol zu. Nach Absaugen und Trocknen erhält man 21,4 g Polymer. 1H- und 13C-NMR zeigen, daß mehr als 98% der olefinischen Doppelbindungen hydriert sind.

### Beispiel 4:

Hydriertes ringgeöffnetes Metathesecopolymer aus 5-Cyano-norbornen-2 mit Tetracyclodedecen (Molverhälnis 40 : 60)

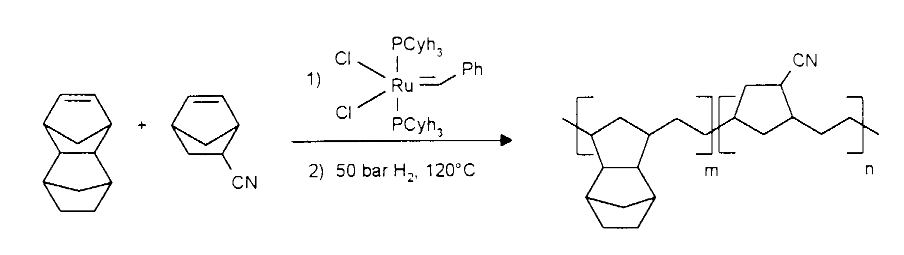

Zu einer Löung von 33 mg (0,04 mMol) Bis(tricyclohexylphosphin)benzylidenrutheniumdichlorid in 25 ml Toluol tropft man bei Raumtemperatur und unter Stickstoff eine Lösung von von 1,9 g (16 mMol) 5-Cyano-norbornen-2 und 3,84 g (24 mMol) Tetracyclododecen in 5 ml Toluol. Man rührt das Reaktionsgemisch 6 Stunden weiter und behandelt die Polymerisation mit 0,2 ml Ethylvinylether. Die dabei resultierende viskose Lösung wird mit 200 ml Toluol verdünnt und 12 h bei 120°C unter 50 bar Wasserstoffdruck hydriert. Man kühlt auf Raumtemperatur ab und tropft die Lösung in Methanol zu. Nach Absaugen und Trocknen erhält man 4,8 g Polymer mit einem gewichtsgemittelten Molgewicht von 33700, einem zahlgemittelten Molgewicht von 9100 (gemessen durch Gelpermeationschromatographie auf Polystyrol-Kalibrierung). 1H- und 13C-NMR zeigen, daß mehr als 98% der olefinischen Doppelbindungen hydriert sind und die Cyanogruppen erhalten geblieben sind.

### Vergleichsbeispiel 2:

### Hydriertes ringgeöffnetes Metathesecopolymer aus 5-Cyano-norbornen-2 mit Tetracyclodedecen (Molverhälnis 40 : 60)

(1) Unter Stickstoff wird 3,97 g (10 mMol) Wolfram(VI)chlorid in 70 ml Toluol gelöst. Zu dieser Lösung wird eine Lösung von 2,36 g (20 mMol) Acetaldehyd-diethylacetal in 30 ml Toluol bei 20-25°C unter Rühren zugetropft. Der dabei gebildete Chlorwasserstoff wird durch einen trockenen Stickstoffstrom innerhalb 3 Stunden ausgeblasen. Die Wolframkonzentration in der erhaltenen Lösung beträgt ca. 0.1 Mol/L.
(2) Zu einer Mischung von 4,76 g (40 mMol) 5-Cyanonorbornen, 2 ml (1 mMol) einer 0,5 M Lösung von Allylethylether in Methylenchlorid und 80 ml Tetrahydrofuran setzt man 3,3 ml ( 0,33 mMol) der in Stufe (1) erhaltenen Katalysatorlösung und 1,3 ml (2,3 mMol) einer 1,8 M Lösung von Diethylaluminiumchlorid in Toluol zu. Anschließend wird innerhalb 2 Stunden eine Lösung von 9,6 g (60 mMol) Tetracyclododecen in 40 ml Tetrahydrofuran zugetropft. Man rührt das Reaktionsgemisch 3 Stunden weiter und stoppt die Polymerisation mit 1 ml Methanol. Die resultierende viskose Lösung enthält ca. 12 g Polymer pro 100 ml und kann für die Hydrierung eingesetzt werden. Um das Polymer zu isolieren, wird die Lösung in Methanol zugetropft. Das ausgefallene Produkt wird abgesaugt und unter Vakuum getrocknet. Man erhält 13,7 g Polymer mit einem gewichtsgemittelten Molgewicht von 30800, einem zahlgemittelten Molgewicht von 12600 (gemessen durch Gelpermeationschromatographie mit Polystyrol-Kalibrierung).
(3) Die in Stufe (2) erhaltene Lösung (ca. 120 ml) wird in einem Hochdruckautoklaven mit einem Magnetrührer vorgelegt. Der Autoklav wird mit Sticktoff inertisiert. Man setzt 50 mg RuHCl(CO)(P(C₆H₅)₃)₃) hinzu und leitet Wasserstoff ein. Unter Rühren wird die Temperatur auf 120°C erhöht. Der Druck bei dieser Temperatur beträgt 50 bar. Das Reaktionsgemisch wird bei dieser Temperatur 10 Stunden gerührt. Man kühlt auf Raumtemperatur ab und tropft die Lösung in Methanol zu. Nach Absaugen und Trocknen erhält man 12,5 Polymer. 1H- und 13C-NMR zeigen, daß mehr als 98% der olefinischen Doppelbindungen hydriert sind und die Cyanogruppen erhalten geblieben sind.

## Patentansprüche

1. Ein Verfahren zur Herstellung hydrierter ringgeöffneter Metathese(co)polymeren aus cyclischen Olefinen unter Verwendung der Ruthenium-Carben-Komplexe der allgemeinen Formel (I) 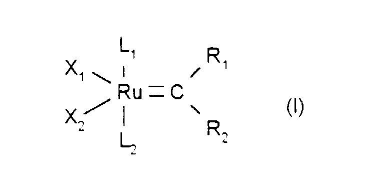 worin
R₁ und R₂ unabhängig von einander Wasserstoff, C₂-C₂₀-Alkenyl, C₁-C₂₀-Alkyl, Aryl, C₁-C₂₀-Carboxylat, C₁-C₂₀-Alkoxy, C₂-C₂₀-Alkenyloxy, Aryloxy, C₂-C₂₀-Alkoxycarbonyl, C₁-C₂₀-Alkylthio, die gegebenfalls durch C₁-C₅-Alkyl, Halogen, C₁-C₅-Alkoxy oder gegebenenfalls durch C₁-C₅-Alkyl, Halogen, C₁-C₅-Alkoxy substituiertes Phenyl substituiert sein können, bedeuten;
X₁ und X₂ unabhängig von einander einen beliebigen anionischen Liganden bedeuten;
L₁ und L₂ unabhängig von einander einen beliebigen neutralen Elektronendonor bedeuten
und zwei oder drei von X₁, X₂, L₁ und L₂ weiterhin zusammen einen mehrzähnigen Chelatliganden bilden können,
als Katalysatoren für die Polymerisationsstufe, dadurch gekennzeichnet, daß man gegebenenfalls nach der Polymerisation durch Zusatz eines Modifikators den Katalysator modifiziert und das Polymerisationsprodukt als Lösung - gegebenenfalls mit dem gleichen inerten Lösungsmittel wie in der Polymerisation oder mit einem anderen inerten Lösungsmittel verdünnt - ohne Zusatz eines Hydrierkatalysators bei Temperaturen von 0°C bis 200°C, unter einem Wasserstoffdruck von 2 bis 200 bar hydriert, wobei mindestens 60% der olefinischen Doppelbindungen abgesättigt sind.

2. Verfahren zur Herstellung hydrierter ringgeöffneter Metathese(co)polymeren aus cyclischen Olefinen gemäß Anspruch 1, wobei man als Katalysatoren die Ruthenium-Carben-Komplexe der allgemeinen Formel (I) verwendet, worin R₁ und R₂ unabhängig voneinander Wasserstoff, Methyl, Ethyl, Phenyl, gegebenenfalls durch Methyl, Ethyl oder Phenyl substituiertes Vinyl bedeuten; X₁ und X₂ unabhängig voneinander Cl, Br bedeuten; L₁ und L₂ unabhängig voneinander Trimethylphosphin, Triethylphosphin, Triphenylphosphin oder Tricyclohexylphosphin bedeuten.

3. Verfahren zur Herstellung hydrierter ringgeöffneter Metathese(co)polymeren aus cyclischen Olefinen gemäß Anspruch 1, wobei die eingesetzten Monomeren multicyclische ringgespannte Olefine mit mindestens einer Norbonen-Teilstruktur sind, die Halogen-, Cyano-, Carbonsäureester-, Carbonsäureamid-, Carbonsäureanhydrid-, Carbonsäureimid-, etherische Sauerstoff- oder Carbonylgruppen tragen können.

4. Verfahren zur Herstellung hydrierter ringgeöffneter Metathese(co)polymeren aus cyclischen Olefinen gemäß Anspruch 1, wobei das eingesetzte Monomer oder Monomerkombination aus
Norbornen-2,
5-Methoxycarbonyl-norbornen-2,
5-Methyl-5-methoxycarbonyl-norbornen-2,
5-Cyanonorbornen-2,
5-Methyl-5-cyanonorbornen-2,
5,5-Dicyanonorbornen-2,
1,4,5,8-Dimethano-1,4,4a,5,6,7,8,8a-octahydronaphthalin,
6-Methyl-1,4,5,8-dimethano-1,4,4a,5,6,7,8,8a-octahydronaphthalin,
6-Methyl-6-methoxycarbonyl-1,4,5,8-dimethano-1,4,4a,5,6,7,8,8a-octahydronaphthalin,
6-Methyloxycabonyl-1,4,5,8-dimethano-1,4,4a,5,6,7,8,8a-octahydronaphthalin,
6-Cyano-1,4,5,8-dimethano-1,4,4a,5,6,7,8,8a-octahydronaphthalin,
6-Ethyl-l,4,5,8-dimethano-1,4,4a,5,6,7,8,8a-octahydronaphthalin,
6-Ethyliden-1,4,5,8-dimethano-1,4,4a,5,6,7,8,8a-octahydronaphthalin,
6,7-Dimethyl-1,4,5,8-dimethano-1,4,4a,5,6,7,8,8a-octahydronaphthalin,
Dicyclopentadien,
Tricyclopentadien,
Tetracyclopentadien,
1,4-Dimethano-1,4,4a,9a-tetrahydrofluoren
ausgewählt ist.

5. Verfahren zur Herstellung hydrierter ringgeöffneter Metathese(co)polymeren aus cyclischen Olefinen gemäß Anspruch 1, wobei mindestens 95% der olefinischen Doppelbindungen abgesättigt sind.

## Claims

1. A process for the production of hydrogenated, ring-opened metathesis (co)polymers from cyclic olefins using the ruthenium/carbene complexes of the general formula (I) 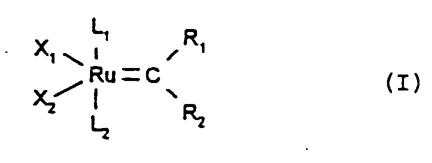 in which
R₁ and R₂ mutually independently mean hydrogen, C₂-C₂₀ alkenyl, C₁-C₂₀ alkyl, aryl, C₁-C₂₀ carboxylate, C₁-C₂₀ alkoxy, C₂-C₂₀ alkenyloxy, aryloxy, C₂-C₂₀ alkoxycarbonyl, C₁-C₂₀ alkylthio, which may optionally be substituted by C₁-C₅ alkyl, halogen, C₁-C₅ alkoxy or by phenyl optionally substituted by C₁-C₅ alkyl, halogen, C₁-C₅ alkoxy;
X₁ and X₂ mutually independently mean any desired anionic ligand;
L₁ and L₂ mutually independently mean any desired neutral electron donor
and two or three of X₁, X₂, L₁ and L₂ may furthermore together form a polydentate chelating ligand,
as catalysts for the polymerisation stage, characterised in that the catalyst is optionally modified after polymerisation by adding a modifier and the polymerisation product is hydrogenated as a solution (optionally diluted with the same inert solvent as during polymerisation or with another inert solvent) without addition of a hydrogenation catalyst at temperatures of 0°C to 200°C, under a hydrogen pressure of 2 to 200 bar, wherein at least 60% of the olefinic double bonds are saturated.

2. Process for the production of hydrogenated, ring-opened metathesis (co)polymers prepared from cyclic olefins according to claim 1, wherein the catalysts used are the ruthenium/carbene complexes of the general formula (I), in which R₁ and R₂ mutually independently mean hydrogen, methyl, ethyl, phenyl, vinyl optionally substituted by methyl, ethyl or phenyl; X₁ and X₂ mutually independently mean Cl, Br; L₁ and L₂ mutually independently mean trimethylphosphine, triethylphosphine, triphenylphosphine or tricyclohexylphosphine.

3. Process for the production of hydrogenated, ring-opened metathesis (co)polymers prepared from cyclic olefins according to claim 1, wherein the monomers used are polycyclic, ring-stressed olefins having at least one norbornene sub-structure and may bear halogen, cyano, carboxylic acid ester, carboxylic acid amide, carboxylic anhydride, carboxylic acid imide, ether oxygen or carbonyl groups.

4. Process for the production of hydrogenated, ring-opened metathesis (co)polymers prepared from cyclic olefins according to claim 1, wherein the monomer or monomer combination used is selected from
2-norbornene,
5-methoxycarbonyl-2-norbornene,
5-methyl-5-methoxycarbonyl-2-norbornene,
5-cyano-2-norbornene,
5-methyl-5-cyano-2-norbornene,
5,5-dicyano-2-norbornene,
1,4,5,8-dimethano-1,4,4a,5,6,7,8,8a-octahydronaphthalene,
6-methyl-1,4,5,8-dimethano-1,4,4a,5,6,7,8,8a-octahydronaphthalene,
6-methyl-6-methoxycarbonyl-1,4,5,8-dimethano-1,4,4a,5,6,7,8,8a-octahydronaphthalene,
6-methyloxycarbonyl-1,4,5,8-dimethano-1,4,4a,5,6,7,8,8a-octahydronaphthalene,
6-cyano-1,4,5,8-dimethano-1,4,4a,5,6,7,8,8a-octahydronaphthalene,
6-ethyl-1,4,5,8-dimethano-1,4,4a,5,6,7,8,8a-octahydronaphthalene,
6-ethylidene-1,4,5,8-dimethano-1,4,4a,5,6,7,8,8a-octahydronaphthalene,
6,7-dimethyl-1,4,5,8-dimethano-1,4,4a,5,6,7,8,8a-octahydronaphthalene,
dicyclopentadiene,
tricyclopentadiene,
tetracyclopentadiene,
1,4-dimethano-1,4,4a,9a-tetrahydrofluorene.

5. Process for the production of hydrogenated, ring-opened metathesis (co)polymers prepared from cyclic olefins according to claim 1, wherein at least 95% of the olefinic double bonds are saturated.

## Revendications

1. Procédé pour la préparation de (co)polymères de métathèse hydrogénés, par ouverture de cycle, à partir d'oléfines cycliques en utilisant les complexes de ruthénium-carbène répondant à la formule générale (I) 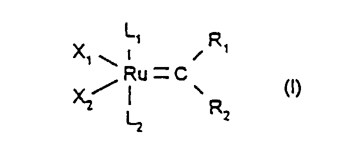 dans laquelle
R₁ et R₂ représentent, indépendamment l'un de l'autre, un atome d'hydrogène, un groupe alcényle en C₂-C₂₀, un groupe alkyle en C₁-C₂₀, un groupe aryle, un groupe carboxylate en C₁-C₂₀, un groupe alcoxy en C₁-C₂₀, un groupe alcényl(en C₂-C₂₀)oxy, un groupe aryloxy, un groupe alcoxy(en C₂-C₂₀)carbonyle, un groupe alkyl(en C₁-C₂₀)thio qui peuvent porter le cas échéant un ou plusieurs substituants identiques ou différents alkyle en C₁-C₅, halogéno, alcoxy en C₁-C₅ ou phényle portant le cas échéant un ou plusieurs substituants identiques ou différents alkyle en C₁-C₅, halogéno, alcoxy en C₁-C₅;
X₁ et X₂ représentent, indépendamment l'un de l'autre, n'importe quel ligand anionique;
L₁ et L₂ représentent, indépendamment l'un de l'autre, n'importe quel donneur d'électrons neutre,
en outre, deux ou trois radicaux parmi X₁, X₂, L₁ et L₂ peuvent former ensemble un ligand de chélation polydenté,
à titre de catalyseurs pour l'étape de polymérisation, caractérisé en ce qu'on modifie le cas échéant le catalyseur après la polymérisation par addition d'un modificateur et on soumet le produit de polymérisation en solution - le cas échéant dilué avec le même solvant inerte que celui utilisé dans la polymérisation ou avec un autre solvant inerte - à une hydrogénation sans ajouter de catalyseur d'hydrogénation à des températures de 0°C à 200°C et sous une pression d'hydrogène de 2 à 200 bar, donnant lieu à une saturation d'au moins 60% des liaisons doubles oléfiniques.

2. Procédé pour la préparation de (co)polymères de métathèse hydrogénés, par ouverture de cycle, à partir d'oléfines cycliques selon la revendication 1, dans lequel on utilise, à titre de catalyseurs, les complexes de ruthénium-carbène répondant à la formule générale (I) dans laquelle R₁ et R₂ représentent, indépendamment l'un de l'autre, un atome d'hydrogène, un groupe méthyle, un groupe éthyle, un groupe phényle, un groupe vinyle portant le cas échéant un ou plusieurs substituants identiques ou différents méthyle, éthyle ou phényle; X₁ et X₂ représentent, indépendamment l'un de l'autre, un atome de chlore, un atome de brome; L₁ et L₂ représentent, indépendamment l'un de l'autre, la triméthylphosphine, la triéthylphosphine, la triphénylphosphine ou la tricyclohexylphosphine.

3. Procédé pour la préparation de (co)polymères de métathèse hydrogénés, par ouverture de cycle, à partir d'oléfines cycliques selon la revendication 1, dans lequel les monomères mis en oeuvre représentent des oléfines polycycliques à cycle sous tension possédant au moins une structure partielle de norbornène, qui peuvent porter un ou plusieurs atomes d'halogène, groupes cyano, groupes d'esters carboxyliques, groupes d'amides d'acides carboxyliques, groupes d'anhydrides carboxyliques, groupes d'imides d'acides carboxyliques, atomes d'oxygène d'éther ou groupes carbonyle.

4. Procédé pour la préparation de (co)polymères de métathèse hydrogénés, par ouverture de cycle, à partir d'oléfines cycliques selon la revendication 1, dans lequel le monomère ou la combinaison de monomères mis en oeuvre est choisie parmi le groupe comprenant
le norbornène-2,
le 5-méthoxycarbonyl-norbornène-2,
le 5-méthyl-5-méthoxycarbonyl-norbornène-2,
le 5-cyanonorbornène-2,
le 5-méthyl-5-cyanonorbornène-2,
le 5,5-dicyanonorbornène-2,
le 1,4,5,8-diméthano-1,4,4a,5,6,7,8,8a-octahydronaphtalène,
le 6-méthyl-1,4,5,8-diméthano-1,4,4a,5,6,7,8,8a-octahydronaphtalène,
le 6-méthyl-6-méthoxycarbonyl-1,4,5,8-diméthano-1,4,4a,5,6,7,8,8a-octahydronaphtalène,
le 6-méthoxycarbonyl-1,4,5,8-diméthano-1,4,4a,5,6,7,8,8a-octahydronaphtalène,
le 6-cyano-1,4,5,8-diméthano-1,4,4a,5,6,7,8,8a-octahydronaphtalène,
le 6-éthyl-1,4,5,8-diméthano-1,4,4a,5,6,7,8,8a-octahydronaphtalène,
le 6-éthylidène-1,4,5,8-diméthano-1,4,4a,5,6,7,8,8a-octahydronaphtalène,
le 6,7-diméthyl-1,4,5,8-diméthano-1,4,4a,5,6,7,8,8a-octahydronaphtalène,
le dicyclopentadiène,
le tricyclopentadiène,
le tétracyclopentadiène,
le 1,4-diméthano-1,4,4a,9a-tétrahydrofluorène.

5. Procédé pour la préparation de (co)polymères de métathèse hydrogénés, par ouverture de cycle, à partir d'oléfines cycliques selon la revendication 1, dans lequel au moins 95% des liaisons doubles oléfiniques sont saturées.
